(19)

Europäisches
Patentamt

European
Patent Office

Office européen
des brevets

(11) **EP 3 327 987 A1**

(12) **EUROPEAN PATENT APPLICATION**

(43) Date of publication:
**30.05.2018 Bulletin 2018/22**

(51) Int Cl.:
***H04L 12/18*** *(2006.01)*

(21) Application number: **16200153.1**

(22) Date of filing: **23.11.2016**

<table>
<tr><td>

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **ABB Schweiz AG**
**5400 Baden (CH)**

</td><td>

(72) Inventors:
• **PANG, Zhibo**
 **722 42 Västerås (SE)**
• **BAG, Gargi**
 **723 44 Västerås (SE)**
• **SCHMITT, Johannes**
 **68526 Ladenburg (DE)**

(74) Representative: **Jin, Xiao-Hong**
 **ABB AB**
 **Intellectual Property**
 **Forskargränd 7**
 **721 78 Västerås (SE)**

</td></tr>
</table>

(54) **DEVICE, SYSTEM AND METHOD FOR SENDING MESSAGES IN A WIRELESS BUILDING AUTOMATION NETWORK**

(57)    The present invention relates a system (1) and a method for sending a message to a plurality of destination devices in a building automation network. The method comprising steps of sending the message to the destination devices by unicast transmissions if the number of the destination devices is smaller than a first threshold or the message is not time critical (S10), calculating a benefit of multicast transmission over unicast transmission by estimating an overall latency of multicast and unicast (S20), sending the message to the destination devices by unicast transmissions if the calculated benefit is smaller than a second threshold (S30), calculating a cost of multicast and a cost of unicast based on a weighted sum (S40), sending the message to the destination devices by multicast transmissions if a difference of between the calculated cost of multicast and the calculated cost of the unicast is smaller than a third threshold (S50), and otherwise sending the message to the destination devices by unicast transmission (S60).

Fig. 1

## Description

## FIELD OF THE INVENTION

The present invention relates to a device, system and method for optimally sending messages in a wireless building automation network of a building automation system. The invention further relates to a system comprising a plurality building automation devices being capable communicate other building automation devices by unicast and/or multicast transmissions.

## BACKGROUND

In a wireless building automation network, two types of communications are typically used at an application level. The first one is to transmit a message packet from one device also called source device to multiple destination devices, thus it is a 1-to-N communication; the second one is to transmit a message packet from one device to another device, it is thus a 1-to-1 communication. In the data link layer of commination stacks, unicast is often used to accomplish the 1-to-1 communication, and the multicast is often used to accomplish the 1-to-N communication. In theory and practice, the 1-to-N communication can also be accomplished/implemented by N times of unicast. To accomplish the 1-to-N communication in a Building Automation System (BAS) that often requires a short latency, for example switch on a large number of lamps by a single button, multicast is traditionally preferred based on an assumption that N times of a unicast has larger latencies than a multicast. However, this assumption is not always correct, and multicast/broadcast/flooding may increase a risk of network congestion since the multicast may trigger more/extra traffic, for example in a case that the packet is forwarded through broadcast by all the devices in a multicast group that have received the packet, as it is defined in a number of Wireless Communication Standards such as Thread. Thus, a network storm/congestion may be caused by multicast transmissions, which may result in even larger latency than the N times of a unicast. Moreover, the traffic caused by the multicast will also disturb other wireless devices nearby due to network storm/congestion, e.g. if a CSMA/CA (Carrier Sensing Multiple Access and Collision Avoidance) is applied in a MAC layer (Media Access Control), the nearby devices will have less chance, i.e. less bandwidth to access radio channels to send packets in the same time period due to shared wireless channel resources, thus resulting in reduced reliability and user experience. Therefore, multicast should be considered to be used when its benefit over unicast can justify its negative effects on forwarding traffic, channel occupation, potential of collisions, power consumption, etc.

The WO2016046005A2 discloses a control device for controlling a plurality of lighting devices via a network. The control device comprises a receiver for receiving a signal based on a user input related to adjusting a control parameter of the plurality of lighting devices. The control device further generates and transmits, based on the received signal and on a predetermined network capacity, either a plurality of messages or a single message via the network, thereby adjusting the control parameter of the plurality of lighting devices. The control device is able to utilize the network optimally by either multicast or unicast transmitting messages based on their impact on the network. Thus, it reduces the probability of network storm to a certain extent, e.g. if a lot of traffic has been measured, the device will avoid using multicast.

## OBJECTS AND SUMMARY OF THE INVENTION

An object of the present disclosure is to improve and reduce communication latency when send a message/packet from a source device to a plurality of destination devices in a BAS.

In a first aspect of the invention, there is a method provided for sending a message to a plurality of destination devices in a building automation network in a BAS. The method comprises steps of

- sending the message to the destination devices by unicast transmissions if the number of the destination devices is smaller than a first threshold or the message is not time critical.
- calculating a benefit of multicast transmission over unicast transmission by estimating an overall latency of multicast and unicast,
- sending the message to the destination devices by unicast transmissions if the calculated benefit is smaller than a second threshold,
- calculating a cost of multicast and a cost of unicast based on a weighted sum,
- sending the message to the destination devices by multicast transmissions if a difference of between the calculated cost of multicast and the calculated cost of the unicast is smaller than a third threshold, and otherwise
- sending the message to the destination devices by unicast transmission.

Due to that fact that the message or packet is send by optimally selecting either a unicast or multicast transmission, the present invented method reduces negative effect of the multicast and further improves reliability and user experiences of the BAS.

The weighted sum is calculated based on all or a part of network factors. One of the network factors is any of the following: the number of devices to be used for forwarding the message, the number of hops from a device to a furthest destination device, a measured network traffic, a risk of network congestion and power consumption, or their combinations.

According to one embodiment of the invention, the third threshold is either pre-defined or based on the calculated benefit of multicast transmission over unicast transmission.

Since the network factors include also information collected by other devices for example the traffic measured at the forwarding devices, and shared between the devices, a reliable base for selecting transmission method between unicast and multicast is provided, which therefore reduces potential network storms or congestions caused by un-carefully selecting multicast.

According to one embodiment of the invention, the method further comprises steps of determining the message is time critical based on an expected delivery latency.

Alternatively, if the destination device expects receive the message and act shortly upon receiving the message, the message is determined as time critical.

According to one embodiment of the invention, the method further calculating a benefit of a multicast transmission over a unicast transmission based measured/estimated multicast and unicast performances.

According to one embodiment of the invention, the method further calculating a benefit of a multicast transmission over a unicast transmission based historic collected statistical data.

In a second aspect of the invention, there is a system comprising a plurality wireless devices. Each of the devices is capable to communicate to other wireless devices with unicast and/or multicast transmission and is configured to perform the method defined in claims 1-9.

According to one embodiment of the invention, the system further comprises a central network management, wherein the central network management is further configured to collect network factors and sharing the collected factors with at least one of the wireless devices, wherein the wireless device is to send a message to a plurality of destination devices.

A further advantage of the present invention is that it is compatible with established standards like Zig-Bee, 6LoWPAN, Thread, WiFi, multi-hop PLC, LAN, etc., which are underlying network technologies for BASs.

**BRIEF DESCRIPTION OF THE DRAWINGS**

The invention will now be explained more closely by the description of different embodiments of the invention and with reference to the appended figures.

Fig. 1 shows a flowchart according to one example of the invention.

Fig. 2-1 illustrates a system schematic view according to one example of the invention.

Fig. 2-2 illustrates a system schematic view according to another example of the invention.

**DETAILED DESCRIPTION OF PREFERRED EMBODIMENTS OF THE INVENTION**

The inventive concept is now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art.

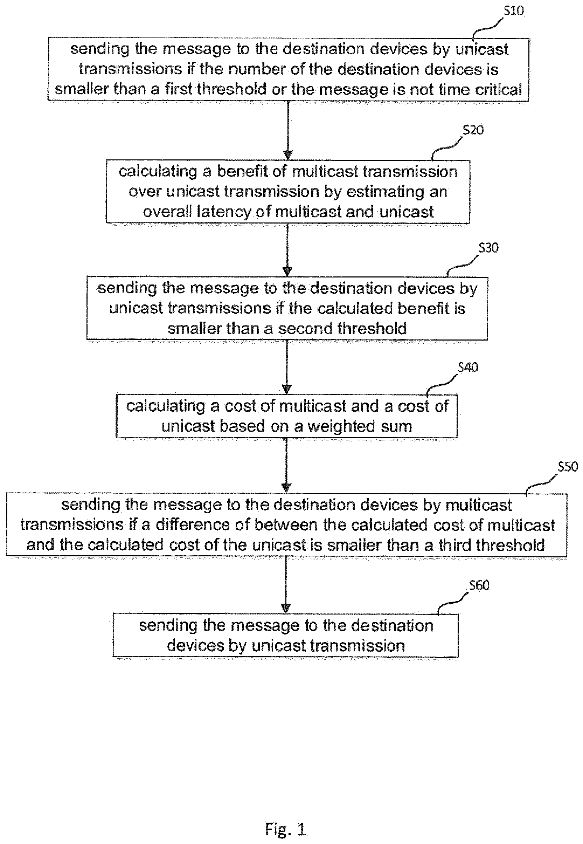

In reference to Figure 1 when a source device 2-1 is about to send a message or a packet to a number of the destination devices, it will perform a number of selection steps. It firstly check whether the number of the destination devices is smaller than a first threshold T1 or not, in case that the number of the destination devices is smaller than the first threshold or the message is not time critical, it sends the message to the destination devices by a series of unicast transmissions, step S10. The first threshold may be decided based on statistics during run time when the BAS is in operation or use a constant value pre-defined by a device manufacturer of the source device. If the message is expected to be received or delivered in a shorter latency and/or if one of the destination devices is expected to take actions almost immediately after the receipt of the message, the message is a time critical message. When the message is a time critical and the number of the destination devices is not smaller than the first threshold, the source device 2-1 will continue the selection process by calculating a benefit of multicast transmission over unicast transmission by estimating an overall latency of multicast and unicast, step S20. In case that the calculated benefit is smaller than a second threshold, the source device will send the message to the destination devices by unicast transmissions, step S30. There are various metrics to define and calculate the benefit and/or the second threshold. One basic method is to estimate a time saving of using multicast rather than unicast. In case that the calculated benefit is not smaller than a second threshold, the source device 2-1 will continue the selection process by calculating a cost of multicast and a cost of unicast based on a weighted sum, step S40. For example, the weighted sum may be calculated based on all or a part of network factors. A network factor is any of the following: the number of devices (N) to be used for forwarding the message, the number of hops (H) from a device to a furthest destination device, a measured network traffic (F), a risk of network congestion (R) and power consumption (P), or their combinations. The cost may be for example calculated as follows,

$$\text{Cost} = R * (a * H + b * N + c * F + d * P)$$

wherein a, b, c, d is the weight of each of the network factors normalized to a range of 0 to1. The selection of weight is done during a development phase based on experiments. If a particular network factor will cause more negative effects or is more concerned by the developer, a higher weight will be given. There are common methods or knowledge in this area. If a difference of between the calculated cost of multicast and the calculated cost of the unicast is smaller than a third threshold, the source device will send the message to the destination devices by multicast transmissions, step S50 and otherwise it sends the message to the destination devices by a series of unicast transmissions, step S60. The third threshold is either pre-defined or based on the calculated benefit of multicast transmission over unicast transmission. It should be understood that the above formula is just one example of calculating the costs, it is possible to use any other methods.

Since the source device 2-1 systematically conduct a series of evaluations of benefit and cost of multicast before it sends out the message, it will optimally select either a unicast or multicast transmission, which reduces negative effect of the multicast and further improves reliability and user experiences.

Each of forwarding devices may measure network traffic and share it with the source device, which is further used to the source device when it evaluates the costs of multicast and unicast. The evaluation of the costs thus provides a reliable base for selecting between unicast and multicast transmission, which reduces potential network storms or congestions caused by arbitrarily and un-carefully selecting multicast in any case.

Alternatively, a benefit of a multicast transmission over a unicast transmission may be calculated based measured/estimated multicast and unicast performances, for example based on the round trip time (RTT) and/or packet delivery rate (PDR) of unicast, and/or the time for complete coverage (TCC) and/or packet delivery rate (PDR) of multicast. These metrics are broadly recognized in the technical field. The packet delivery rate means a ratio between successful delivered packets/messages and a total delivered packets/messages.

Another alternative is to calculate a benefit of a multicast transmission over a unicast transmission based historic collected statistical data.

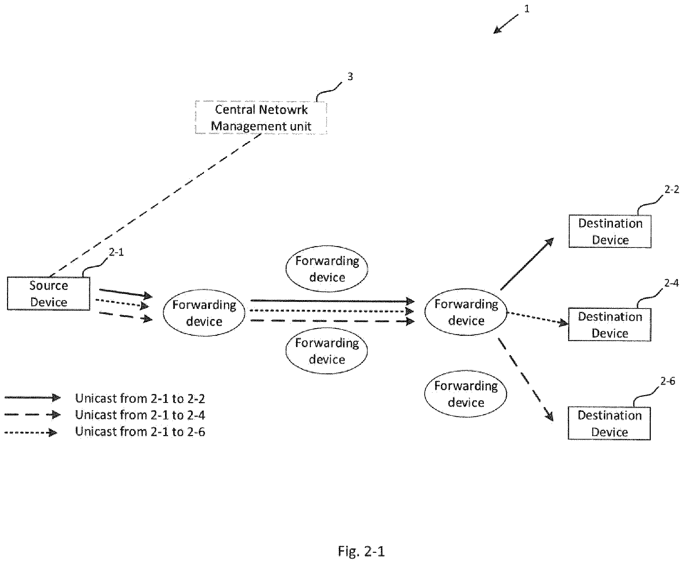

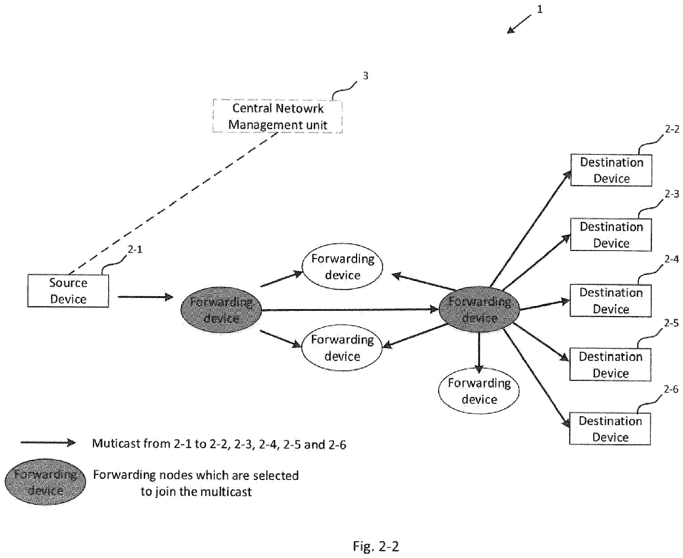

Figures 2-1 and 2-2 show two possible system schematic views of the selections between the unicast and multicast, wherein a Building Automation System 1 comprises a plurality of devices 2-1, 2-2, ..., 2-N (not all devices are shown in the figures), each being able wirelessly communicated with other by unicast and/or multicast transmissions.

Difference between Figure 2-1 and 2-2 is that, in Figure 2-1, unicast transmissions are selected when the source device 2-1 sends the message to the destination devices 2-2, 2-4 and 2-6; while in Figure 2-2 multicast transmissions are selected when the source device 2-1 sends the message to the destination devices 2-2, 2-3, 2-4, 2-5 and 2-6. The selections are based on the flowchart of Figure1. Thus, the selection of multicast is not an arbitrary decision and its other aspects such as negative effects or costs are also taken into account.

In reference to Figures 2-1 and 2-2, the system 1 further comprises a central network management unit 3 configured to collect network factors and sharing the collected factors with at least one of the wireless devices, wherein the wireless device is to send a message to a plurality of destination devices.

The present invention is simple to be implemented into low cost building automation wireless devices without requiring powerful computing capabilities. Almost any of mainstream chipsets has sufficient resources like hardware timers and CPU speed to run an algorithm based on the invention. Furthermore, the present invention may include computer program products installed or equipped on the building automation wireless devices, which are non-transitory storage media or computer readable media having instructions stored thereon/in which when executed by a processor performs the method of the present invention. Examples of the storage medium may include, but is not limited to, any type of disk including floppy disks, optical discs, DVD, CD-ROMs, microdrive, and magneto-optical disks, ROMs, RAMs, EPROMs, EEPROMs, DRAMs, VRAMs, flash memory devices, magnetic or optical cards, nanosystems (including molecular memory ICs), or any type of media or device suitable for storing instructions and/or data.

## Claims

1. A method for sending a message to a plurality of destination devices in a building automation network, the method comprising steps of

    - sending the message to the destination devices by unicast transmissions if the number of the destination devices is smaller than a first threshold or the message is not time critical (S10),
    - calculating a benefit of multicast transmission over unicast transmission by estimating an overall latency of multicast and unicast (S20),
    - sending the message to the destination devices by unicast transmissions if the calculated benefit is smaller than a second threshold (S30),
    - calculating a cost of multicast and a cost of unicast based on a weighted sum (S40),
    - sending the message to the destination devices by multicast transmissions if a difference of between the calculated cost of multicast and the calculated cost of the unicast is smaller than a third threshold (S50), and otherwise
    - sending the message to the destination devices by unicast transmission (S60).

**2.** Method according to claim 1, further comprising determining the message is time critical based on an expected delivery latency.

**3.** Method according to claim 1, further comprising determining the message is time critical based on whether or not a destination device is expected to receive the message and act shortly upon receiving the message.

**4.** Method according to claim 1, further comprising calculating a benefit of a multicast transmission over a unicast transmission based historic statistical data.

**5.** Method according to claim 1, further comprising calculating a benefit of a multicast transmission over a unicast transmission based measured/estimated multicast and unicast performances.

**6.** Method according to claim 1, wherein the weighted sum is calculated based on all or a part of network factors.

**7.** Method according to claim 6, wherein the network factors is any of the following: the number of devices to be used for forwarding the message, the number of hops from a device to a furthest destination device, a measured network traffic, a risk of network congestion and power consumption, or their combinations.

**8.** Method according to claim 1 further comprising collecting and sharing the network factors.

**9.** Method according to claim 1, wherein the third threshold is either pre-defined or based on the calculated benefit of multicast transmission over unicast transmission.

**10.** A wireless device in a wireless building automation network being capable to communicate to other wireless devices with unicast and/or multicast transmission, **characterized in that** the wireless device is configured to perform the method according to claims 1-9.

**11.** A system of a wireless building automation 1 comprising a plurality wireless devices (2-1, 2-2, ..., 2-6) according to claim 10.

**12.** System (1) according to claim 11 further comprising a central network management unit (3), wherein the central network management unit (3) is further configured to collect network factors and sharing the collected factors with at least one of the wireless devices (2-1, ..., 2-6), wherein one (2-1) of the wireless devices is to send a message to the other devices (2-2, ..., 2-6).

S10

sending the message to the destination devices by unicast transmissions if the number of the destination devices is smaller than a first threshold or the message is not time critical

S20

calculating a benefit of multicast transmission over unicast transmission by estimating an overall latency of multicast and unicast

S30

sending the message to the destination devices by unicast transmissions if the calculated benefit is smaller than a second threshold

S40

calculating a cost of multicast and a cost of unicast based on a weighted sum

S50

sending the message to the destination devices by multicast transmissions if a difference of between the calculated cost of multicast and the calculated cost of the unicast is smaller than a third threshold

S60

sending the message to the destination devices by unicast transmission

Fig. 1

1

3

Central Netowrk
Management unit

2-2

Destination
Device

2-1

Forwarding
device

Source
Device

Forwarding
device

Forwarding
device

Forwarding
device

2-4

Destination
Device

Forwarding
device

Forwarding
device

2-6

Destination
Device

Unicast from 2-1 to 2-2
Unicast from 2-1 to 2-4
Unicast from 2-1 to 2-6

Fig. 2-1

Fig. 2-2

Europäisches
Patentamt

European
Patent Office

Office européen
des brevets

**EUROPEAN SEARCH REPORT**

Application Number

EP 16 20 0153

**DOCUMENTS CONSIDERED TO BE RELEVANT**

| Category | Citation of document with indication, where appropriate, of relevant passages | Relevant to claim | CLASSIFICATION OF THE APPLICATION (IPC) |
|---|---|---|---|
| X | US 2013/034039 A1 (WONG DAVID LIANG TAI [MY] ET AL) 7 February 2013 (2013-02-07) * page 1, paragraph 1 - page 15, paragraph 257 * | 1-12 | INV. H04L12/18 |
| X | WO 2011/070479 A1 (KONINKL PHILIPS ELECTRONICS NV [NL]; ERDMANN BOZENA [DE]; TOLHUIZEN LU) 16 June 2011 (2011-06-16) | 1,10,11 | |
| A | * page 1, line 4 - page 16, line 19 * * abstract * | 2-9,12 | |
| A | US 2011/263250 A1 (MUECK MARKUS [DE] ET AL) 27 October 2011 (2011-10-27) * page 1, paragraph 4 - page 14, paragraph 159 * | 1-12 | |
| A | US 2007/147411 A1 (BIJWAARD DENNIS [NL] ET AL) 28 June 2007 (2007-06-28) * page 1, paragraph 1 - page 7, paragraph 58 * | 1-12 | |

TECHNICAL FIELDS
SEARCHED (IPC)

H04L

The present search report has been drawn up for all claims

| Place of search | Date of completion of the search | Examiner |
|---|---|---|
| Munich | 8 June 2017 | Oteo Mayayo, Carlota |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 20 0153

This annex lists the patent family members relating to the patent documents cited in the above-mentioned European search report.
The members are as contained in the European Patent Office EDP file on
The European Patent Office is in no way liable for these particulars which are merely given for the purpose of information.

08-06-2017

| Patent document cited in search report | | Publication date | Patent family member(s) | | Publication date |
|---|---|---|---|---|---|
| US 2013034039 | A1 | 07-02-2013 | CN | 102907123 A | 30-01-2013 |
| | | | US | 2013034039 A1 | 07-02-2013 |
| | | | WO | 2012111344 A1 | 23-08-2012 |
| WO 2011070479 | A1 | 16-06-2011 | CN | 102652445 A | 29-08-2012 |
| | | | EP | 2510722 A1 | 17-10-2012 |
| | | | EP | 2750448 A1 | 02-07-2014 |
| | | | JP | 5628340 B2 | 19-11-2014 |
| | | | JP | 2013513989 A | 22-04-2013 |
| | | | US | 2012236778 A1 | 20-09-2012 |
| | | | WO | 2011070479 A1 | 16-06-2011 |
| US 2011263250 | A1 | 27-10-2011 | AU | 2011243060 A1 | 25-10-2012 |
| | | | BR | 112012027096 A2 | 26-07-2016 |
| | | | CA | 2793886 A1 | 27-10-2011 |
| | | | CN | 102860059 A | 02-01-2013 |
| | | | EP | 2561697 A2 | 27-02-2013 |
| | | | JP | 6012593 B2 | 25-10-2016 |
| | | | JP | 2013526180 A | 20-06-2013 |
| | | | KR | 20130023247 A | 07-03-2013 |
| | | | RU | 2012147732 A | 27-05-2014 |
| | | | SG | 184173 A1 | 29-11-2012 |
| | | | TW | 201218711 A | 01-05-2012 |
| | | | US | 2011263250 A1 | 27-10-2011 |
| | | | WO | 2011133362 A2 | 27-10-2011 |
| US 2007147411 | A1 | 28-06-2007 | CN | 101346929 A | 14-01-2009 |
| | | | EP | 1964315 A2 | 03-09-2008 |
| | | | JP | 4901878 B2 | 21-03-2012 |
| | | | JP | 2009521843 A | 04-06-2009 |
| | | | KR | 20080085841 A | 24-09-2008 |
| | | | US | 2007147411 A1 | 28-06-2007 |
| | | | US | 2011122873 A1 | 26-05-2011 |
| | | | WO | 2007075398 A2 | 05-07-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2016046005 A2